# EUROPEAN PATENT APPLICATION

(11) **EP 3 726 382 A1**
(43) Date of publication of application: **21.10.2020**
(21) Application number: 20166269.9
(22) Date of filing: 27.03.2020
(51) Int. Cl.: G06F 9/54

(54) **DEEP LEARNING THREAD COMMUNICATION**

(30) Priority: 19.04.2019 US 201916389548
(71) Applicant: Nvidia Corporation, Santa Clara, CA 95050 (US)
(72) Inventor: FAHS, Brian, Santa Clara,, CA, 95050 (US); LIGHTSTONE, Michael, Santa Clara,, CA, 95050 (US); HAGOG, Mostafa, Santa Clara,, CA, 95050 (US)
(74) Representative: Kraus & Weisert Patentanwälte PartGmbB

(57) **Abstract**

An application binary interface (ABI) can be exposed in a processor to enable blocks of threads, which may correspond to separately compiled operators, to communicate without storing data to global memory external to the processor. The ABI can define how results of one computation, corresponding to a first thread block, will be organized in registers and shared memory of a processor at the end of one operator (*i.e.,* kernel). The start of the next operator (*i.e.,* kernel), corresponding to a second thread block, can consume the results from the registers and shared memory. Data can be stored to processor local storage for individual threads as they exit the block. Once published, libraries can be separately compiled, optimized, and tested as long as they adhere to the published ABI.

## Description

### BACKGROUND

As the complexity of varying computing tasks continues to increase, there is a corresponding demand to increase the performance of the systems performing those tasks. The configurations and designs of some of those systems, however, place limits on the performance that can be obtained. For example, certain processing devices are configured such that the results of various operations are stored to global memory, which is then accessible to other operations. Having to propagate the data through a hierarchical memory system can limit the ability to obtain higher bandwidth and lower latency performance for applications such as deep learning.

### BRIEF DESCRIPTION OF THE DRAWINGS

Various embodiments in accordance with the present disclosure will be described with reference to the drawings, in which:
FIG. 1 illustrates an example system that can be used to implement aspects of various embodiments.
FIG. 2 illustrates an example hierarchical memory usage that can be utilized in accordance with various embodiments.
FIG. 3 illustrates components of an example processor that can be utilized in accordance with various embodiments.
FIG. 4 illustrates an example call between threads that can be managed in accordance with various embodiments.
FIG. 5 illustrates an example call between blocks of threads that can be managed in accordance with various embodiments.
FIG. 6 illustrates a first example process for managing blocks of threads in a processor that can be utilized in accordance with various embodiments.
FIG. 7 illustrates a second example process for managing blocks of threads in a processor that can be utilized in accordance with various embodiments.
FIG. 8 illustrates an example parallel processing unit (PPU) that can be utilized in accordance with various embodiments.
FIGS. 9A and 9B illustrate an example GPC and partition unit that can be utilized in accordance with various embodiments.
FIG. 10 illustrates an example streaming multi-processor that can be utilized in accordance with various embodiments.
FIG. 11 illustrates an example System-on-Chip (SoC) that can be utilized in accordance with various embodiments.
FIG. 12 illustrates components of an example computing system that can be utilized to implement aspects of the various embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

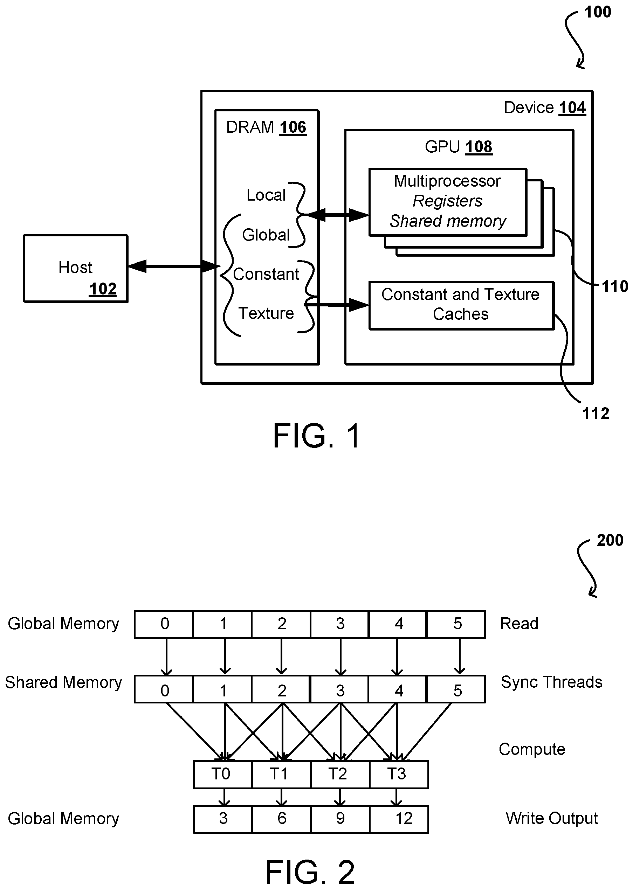

FIG. 1 illustrates an example system 100 that can be used to implement aspects of the various embodiments. In the figure, a host machine 102 (such as a desktop computer, server, or workstation) is able to communicate with a processing device 104. The processing device can comprise a peripheral card or appliance, for example, that can include at least one processor, such as a graphics processing unit (GPU) 108, that is able to perform various tasks on behalf of the host 102. Historically, the GPU would perform graphics-related tasks, such as may be useful for rendering computer animation. Platforms and technologies have developed, however that enable these GPUs to function as general purpose processors. An example of such a platform is CUDA from NVIDIA Corporation. CUDA is a parallel computing platform and application programming model that enables the GPU 108 to be used for general purpose processing using an approach referred to as general-purpose computing on graphics processing units (GPGPU). The CUDA device can provide a software layer that provides direct access to the virtual instruction set and parallel computational elements of the GPU, for execution of compute kernels. Since a GPU is a highly parallel multi-core processing device that allows for very efficient manipulation of large blocks of data, the GPU can then be more effective at general purpose computing than conventional central processing units (CPUs) for algorithms where processing of large blocks of data is performed in parallel. Examples of such applications include fast sort algorithms of large lists, particle simulations, and fast wavelet transforms, among others.

Another application that can benefit from use of a GPU for such tasks involves machine learning. Many deep learning models or neural networks require large batches of data to be processed in parallel, which naturally lends itself to processing on one or more GPUs. In deep learning, substantial performance improvements can be attained when two independent operations can be combined together to enable higher bandwidth and lower latency propagation of results from one operator to the other. If the operations are not combined, or fused, the outputs for many conventional devices will have to be propagated through a hierarchical memory system of the GPU. As illustrated, the processing device 104 includes various memories or data storage devices, as may include global memory in the form of a DRAM 106 or other memory chip, as well as local memory in the multiprocessors 110 of the GPU 108. As discussed in more detail elsewhere herein, the local memory can include a set of registers and shared memory, among other such options. As illustrated, the GPU can also include one or more caches 112 for storing data such as constant and texture data, etc.

FIG. 2 illustrates an example of a hierarchical memory structure 200 that can be used by such devices. In this example, a global memory is illustrated that stores data to be processed. When a task is to be executed, such as an operator computation, a read can be performed to cause input from the global memory to be copied into a temporary array in shared memory, such as by using all threads in a block of threads for the task. A thread is a sequence of program instructions that can be managed independently by a scheduler, which is commonly part of the operating system (OS) of the device. In at least some environments, a thread of execution is the smallest such sequence. Multiple threads can exist within a single process, executing concurrently and sharing resources such as memory, while other processes do not share these resources. The process can wait until the input is stored in shared memory, such as by using a sync threads call or function. A computation can then be performed, with the results being written or stored back to global memory.

As mentioned, various devices can process threads in blocks. A thread block is a programming abstraction that can be used to represent a group of threads that can be executed serially or in parallel. Threads are grouped into thread blocks in at least some systems because the grouping can provide for better process and data mapping. The number of threads in a thread block can vary, such as may be based upon the architecture and/or an amount of available shared memory. The threads in a given thread block can execute on the same stream processor, and can communicate with each other via shared memory, among other such options. In CUDA, the kernel is executed with the aid of threads that represent the execution of the kernel. Multi-threaded applications can use many such threads to organize parallel computation. Each thread in a block can have an index that can be used for calculating memory address locations and also for taking control decisions.

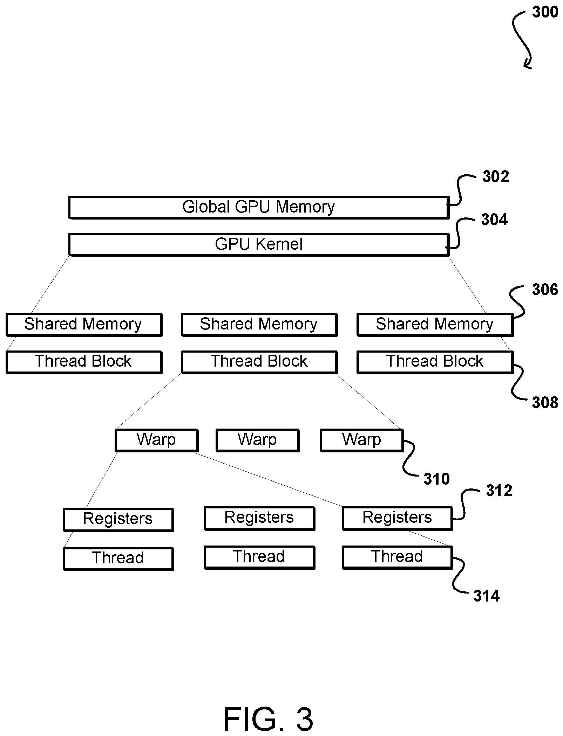

FIG. 3 illustrates an example memory and execution hierarchy 300 that can be utilized in various processing devices, such as CUDA GPUs. This hierarchy includes global GPU memory 302 accessible by the GPU kernel 304. As mentioned, the GPU kernel 304 can be executed using a number of threads that can be organized into one or more thread blocks 308, with each thread block having a respective shared memory 306. The individual threads 314 of the blocks 308 can store data to local registers 312, as well as the respective shared memory 306. The architecture can take advantage of a number of warps 310. A warp 310 in various embodiments comprises a set of threads that all share the same code, follow the same execution path with minimal divergence, and will generally stall at the same places. The commonality of the threads belonging to a warp can be used advantageously by combining their memory accesses and assuming that the threads in a warp can be started and stopped at the same time, rather than deciding on a per-thread basis.

As mentioned, for applications such as deep learning it can be possible to attain substantial performance improvements by combining operators, libraries, computations, code, operations, etc. These can include improvements in bandwidth and latency, among other such options, in the propagation of results from one operator to another. In some approaches, a first function 404 for an operation can call a second function 406 within a single thread 408 in order to pass information between operators, where those operators have been separately compiled. Other conventional approaches take the perspective of a functional call within a thread rather than a call across threads. In that case, data could be passed through the stack *(i.e.,* thread local memory) and perhaps also through the registers. As mentioned, such approaches have to write the result of the first thread to global memory, in order to be accessible to the second thread. An approach in accordance with various embodiments can utilize an interface such as an application binary interface (ABI) 402 to manage the call between the threads. An ABI functions as a contract between pieces of binary code, as it defines the mechanisms by which functions are invoked. An ABI can also describe a handshake between a caller and a callee executed on a single thread *(i.e.,* the caller stalls waiting for a return from the callee). The ABI 402 can also determine how return values are provided to callers, how libraries are implemented, and how programs are loaded into memory, among other such options. An ABI can also potentially define and/or enforce rules on execution of various code or processes. An ABI in some embodiments is defined by a combination of the kernel, the toolchain, and the architecture.

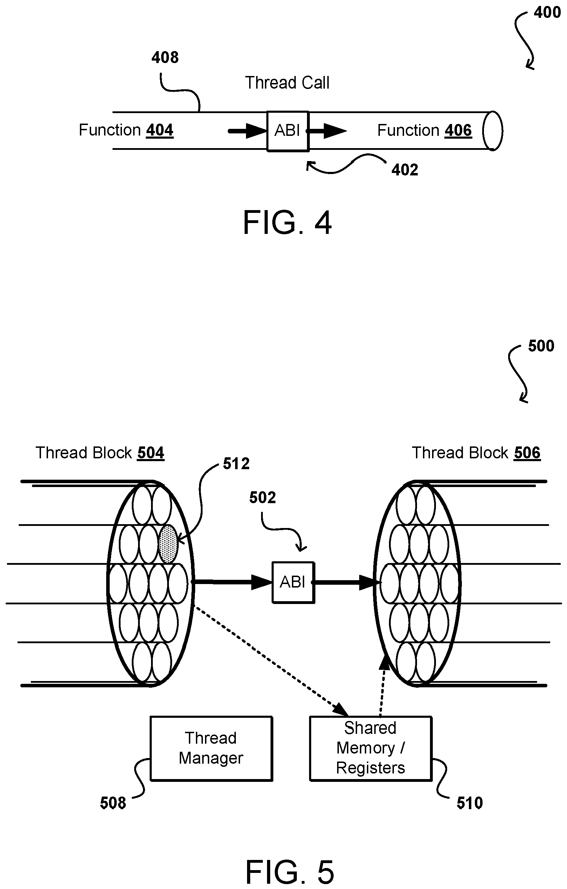

In the architecture of FIG. 4, however, threads are still only able to call other threads, and the output data from the individual threads must be propagated through the hierarchical memory system. Fusing every combination of operator is intractable, due to the number of permutations and the space of all possible operators not being known *a priori.* Approaches in accordance with various embodiments can provide for the fusing of operators that are separately compiled, optimized, and tested while enabling high bandwidth, low latency propagation of results from one operator to the next. Such an approach can provide for fusing of a proprietary library of operators with customer operators, without requiring dynamic or late-binding compilation. The latter property can be important for automotive applications, for example, where dynamic- or link-time optimization may be unreasonable for reliability reasons. Various other applications can take advantage of aspects of the various embodiments as well as discussed and suggested herein.

Accordingly, approaches in accordance with various embodiments can define and expose an application binary interface (ABI) 502 that defines how results of one computation will be organized in registers and shared memory 510 of the processor cores of an accelerator at the end of one operator *(i.e.,* kernel), as illustrated in the example configuration 500 of FIG. 5. Taking such an approach, the start of the next operator *(i.e.,* kernel) can consume the results without reading them from global memory. Once published, libraries can be separately compiled and optimized as long as they adhere to the published ABI. As illustrated, the ABI can provide for calls between two blocks of threads 504, 506. These thread blocks can each include a number of individual threads that may be related or unrelated in various embodiments. The thread blocks can communicate independent of whether all threads in the blocks are still active. For example, an individual thread 512 may complete execution and store its result data to the shared memory and/or registers 510 of local storage for the processor. That thread 512 may then exit the thread block 504. The active threads of the thread block 504 can still, however, go on to produce results that may also need to be communicated to the threads of the other thread block 506 through the ABI 502. The thread 512 that may exit the thread block 504 early will not affect the set of active threads in the thread block 506. In some embodiments, the ABI can work with a thread manager 508 *(i.e.,* scheduler) of the processing device to handle aspects such as the grouping of threads into blocks, as well as the starting and stopping of individual threads, etc. The ABI can define how data is communicated through registers, but in at least some embodiments the data would not be accessed through the ABI.

An accelerator ABI in accordance with various embodiments can then pass results of an entire math operation through a combination of registers and shared memory to achieve high performance. As mentioned, a per-thread ABI as described with respect to FIG. 4 can allow individual threads to make calls to separately compiled routines. Approaches in accordance with various embodiments can be used to optimize tail calls for the result of an entire cooperative group of threads, such as a thread block or set of warps, instead of individual threads within such a cooperative group. Such approaches can also enable deep learning frameworks to fuse operators that span the boundary crossing between proprietary libraries or user-defined operators.

It should be noted that the thread blocks 504, 506 illustrated in FIG. 4 can be reconfigurable. This can include the number or selection of threads in the block at any time, as well as functional aspects of the block. The ABI 502 can enable the threads to continue to communicate, and utilize the shared memory / registers for local storage, during and after such reconfiguration. Some embodiments can utilize an application programming interface (API - not shown) that defines how data can be efficiently passed to enable an entire thread group to make a call to another thread group using an ABI that supports high bandwidth, low latency tail calls.

Upon the termination of a thread block 504, a determination can be made as to whether another thread block is to be executed to consume the results left in the registers and shared memory from the first thread block. If so, the state associated with each warp to be included in the next thread block can be updated. The program counter can also be updated to the starting address of the next kernel to execute. Thread index information may also need to be reconfigured. A thread block executed immediately after the completion of a prior thread block can thus have the state preserved so the callee can consume the results. State information associated with the thread block that may need to be updated can include, for example, barrier configuration, shared memory range, and the location of parameters for the following kernel, among other such options.

In at least some embodiments, functionality in accordance with various embodiments can be accomplished through software without additional hardware support for various processing devices. A challenge involved in emulating this functionality without hardware support revolves around emulating limitations that are automatically handled by conventional hardware. To make things easier, a software-emulated version can be used that has a restriction of requiring the caller kernel to inherit the thread block shape and shared memory capacity of the parent thread block. Such functionality can reduce the set of challenges with intercepting exit instructions (e.g., early kernel returns) so that the warp or thread could be resurrected at the start of the next kernel, such as by swapping an exit with a branch to a barrier reserved for synchronizing a thread block before the start of the next kernel.

For applications such as machine learning, there may be various math operations (e.g., matrix multiplies or convolutions) being performed in parallel and connected together. These operations would each have to go out to global memory using conventional approaches, which can significantly impact performance. The additional steps also result in increased power usage, and resource unavailability, among other types of impact. Approaches in accordance with various embodiments can store the data for entire blocks of threads locally such that in many instances none of the individual threads will need to go back to global memory to pick up the state of a prior thread or result of a previous operation on which it is to operate.

As mentioned, some prior approaches have attempted to combine operations and compile those operations together so they do not have to go out to global memory. A challenge with such an approach is that some libraries or compilers may be open source while some may be proprietary, or there might be other reasons why the operators cannot be compiled together. Thus, there will still be an effective boundary between the different groups of compiled operations. Using approaches in accordance with various embodiments, the groupings of compiled operations can each correspond to one or more thread blocks that can communicate using one or more ABIs, which can store the relevant data locally to registers and shared memory. Such an approach can enable all operations to benefit from improved performance even if at some of those operations are not able to be compiled together. An entire thread block can produce one or more results, which can be read by the other thread block from local memory, enabling the separate compiled operators to communicate without going through global memory.

Approaches in accordance with various embodiments can allow data stored in the local storage of a processor to be communicated to a calling function. A convention can be used that is agreed upon ahead of time, which may be similar to a handshake that is agreed upon for a stack used with conventional ABIs. The called function (the "callee"), however, can obtain data for an entire thread block, which can include thousands of threads in some embodiments. The threads in a block can then work together, exiting one routine and allowing a new thread block to read the information and start where that thread left off. Such an approach would not work with conventional systems, as there would be no way to determine where the threads are going to run on the next thread block, where the relevant data will be located, etc. A primary advantage of various embodiments then is the fact that the system can know where the data is being stored for a block of threads, the data will be stored locally to the processor, and another thread or thread block can come along and read that information. In some embodiments, this functions similar to a coordinated function call across a large number of threads. Today, a thread can make a function call, but a group of threads cannot. In various embodiments, a group of threads can save their state locally then make a function call, and the callee (*e.g.,* a second thread block) can then obtain and act on the data from the caller (*e.g.,* the first thread block). In these embodiments, the threads of a block are working together and saving their state to a specific location. The callee then knows the location of the data when called. This can have significant advantages when the operations of the caller and the callee are compiled separately. The ABI can be used to store the data locally, effectively decoupling the separately compiled operations. Further advantages are obtained based on the fact that, particularly for accelerators like GPUs, for example, the threads often are working together but independently to complete a task, and the threads can complete and exit at different times, but embodiments here enable all the relevant data to be stored locally until needed by the corresponding callee. A thread exiting the block does not negatively impact the block because the call was made on behalf of the block, not one or more individual threads. In various embodiments, system runtime support can intercept all calls that would exit a thread and store the information appropriately.

Various embodiments can provide support in the hardware itself. For CUDA-based implementations, for example, an active mask query can be used to determine which threads are active at any given time. In one embodiment, an active mask query can include a 32-bit mask of all currently active threads in a calling warp. The mask can thus indicate to the calling thread, or thread block in this example, which threads in its warp are also executing the same active mask. There may be various reasons why an active thread might be disabled, with a reason being the thread exiting once completing its assigned task or workload. The system could allow threads to exit normally, but once the program has completed the program counter can be set to a new program counter. Rather than turning the thread block off and allowing a new thread block to come in, the program counter could instead be redirected and the corresponding threads reactivated. Using the new program counter, execution could start at that location with that new set of threads. The code can then be compiled such that it can be read from shared memory in registers where the data was stored, and the data in shared memory is not available outside the thread block (either the caller or callee). The interface enables sharing data between thread blocks, where only the called thread block is able to access the shared data. Data visibility can be enforced across the threads of a block, and information will be published as to how the data is to be accessed from the shared memory via the ABI. The relevant operators can also be compiled in a specific way to provide hooks for this type of behavior. Such approaches also can be used to ensure that the state of the caller does not impact what is running in the callee, which can be important for stability in at least some systems. Further, the callee can request additional or fewer threads in a block, providing for further decoupling. Such approaches can provide advantages for compilers, including separate compilers used for most deep learning applications.

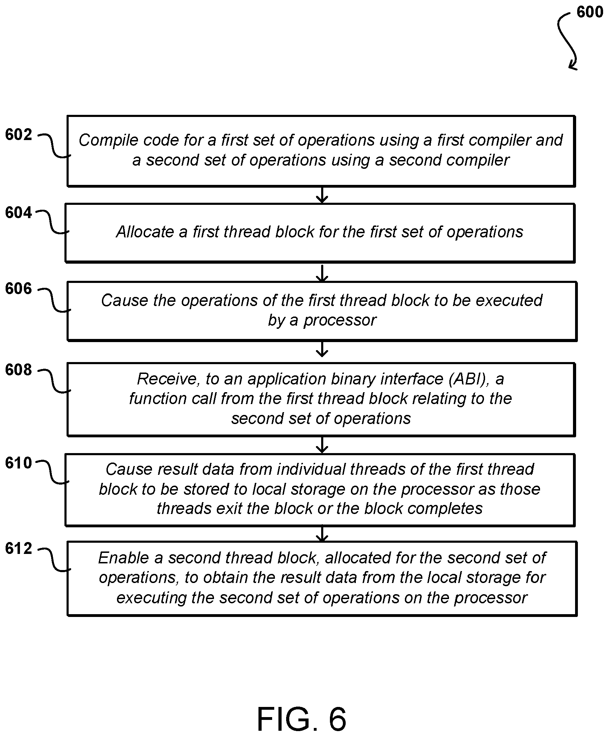

FIG. 6 illustrates an example process 600 for managing communication between blocks of threads that can be utilized in accordance with various embodiments. It should be understood for this and other processes discussed herein that there can be additional, alternative, or fewer steps performed in similar or alternative orders, or in parallel, within the scope of the various embodiments unless otherwise stated. In this example, code for a first set of operations (e.g., computations, operators, etc.) is compiled 602 using a first compiler and a second set of operations is compiled using a second compiler. A first thread block can be allocated 604 for the first set of operations. At least a subset of the operations corresponding to the first thread block can be caused to be executed 606 by a processor, such as a multiprocessor of a GPU as discussed herein. A function call can be received 608 from the first block of threads to an application binary interface (ABI) on the multiprocessor. The call can indicate, or otherwise be associated with, a callee, such as the second set of operations or a second thread block associated with the second set of operations. Result data from individual threads (or the entire first thread block) can be written to local storage (e.g., registers and/or shared memory) of the multiprocessor as those threads exit the block and/or the block completes. A second thread block, allocated for the second set of operations, can then be enabled 612 to access the result data from the local storage on the processor for executing the second set of operations.

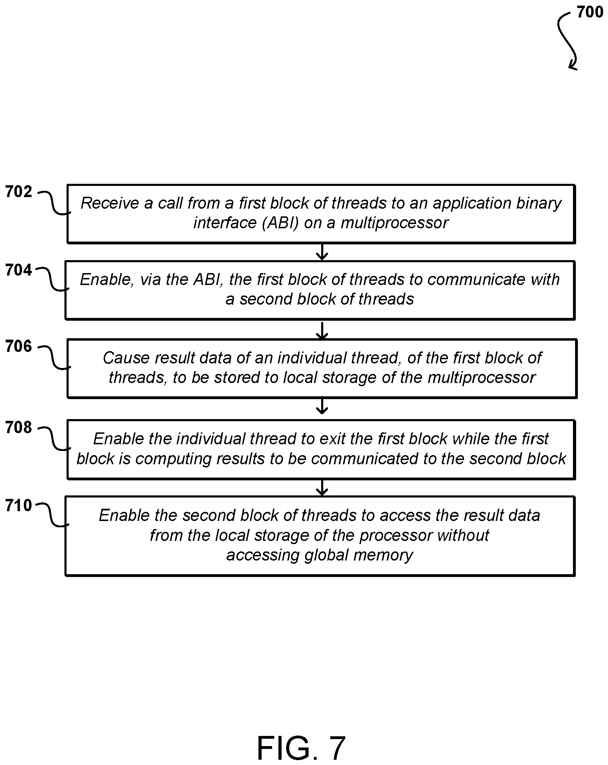

FIG. 7 illustrates another example process 700 for managing communications between blocks of threads that can be utilized in accordance with various embodiments. In this example, a call is received 702 from a first block of threads to an ABI on a multiprocessor. The first block of threads can then be enabled 704, via the ABI, to communicate with a second block of threads. As discussed herein, the first and second blocks of threads may correspond to separately compiled code and may be sufficiently decoupled in at least some embodiments. The result data of an individual thread, of the first block of threads, can be caused 706 to be stored to local storage of the multiprocessor, such as to one or more registers or shared memory. The individual thread can also be enabled 708 to exit the first block of threads while the first block is still computing results to be communicated to the second block of threads. The second block of threads can be enabled 710 to access the result data from the local storage of the processor for execution, without accessing global memory. As mentioned, in at least some embodiments the locally stored data will only be accessible to the first and second blocks of threads.

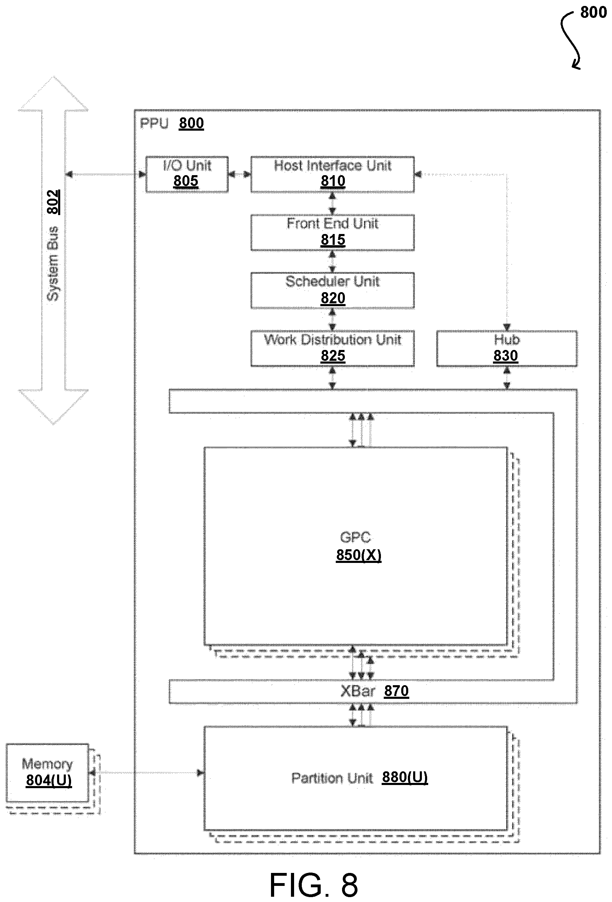

FIG. 8 illustrates a parallel processing unit (PPU) 800, in accordance with one embodiment. In one embodiment, the PPU 800 is a multi-threaded processor that is implemented on one or more integrated circuit devices. The PPU 800 is a latency hiding architecture designed to process a large number of threads in parallel. A thread (i.e., a thread of execution) is an instantiation of a set of instructions configured to be executed by the PPU 800. In one embodiment, the PPU 800 is a graphics processing unit (GPU) configured to implement a graphics rendering pipeline for processing three-dimensional (3D) graphics data in order to generate two-dimensional (2D) image data for display on a display device such as a liquid crystal display (LCD) device. In other embodiments, the PPU 800 may be utilized for performing general-purpose computations. While one exemplary parallel processor is provided herein for illustrative purposes, it should be strongly noted that such processor is set forth for illustrative purposes only, and that any processor may be employed to supplement and/or substitute for the same.

As shown in FIG. 8, the PPU 800 includes an Input/Output (I/O) unit 805, a host interface unit 810, a front end unit 815, a scheduler unit 820, a work distribution unit 825, a hub 830, a crossbar (Xbar) 870, one or more general processing clusters (GPCs) 850, and one or more partition units 880. The PPU 800 may be connected to a host processor or other peripheral devices via a system bus 802. The PPU 800 may also be connected to a local memory comprising a number of memory devices 804. In one embodiment, the local memory may comprise a number of dynamic random access memory (DRAM) devices.

The I/O unit 805 is configured to transmit and receive communications (i.e., commands, data, etc.) from a host processor (not shown) over the system bus 802. The I/O unit 805 may communicate with the host processor directly via the system bus 802 or through one or more intermediate devices such as a memory bridge. In one embodiment, the I/O unit 805 implements a Peripheral Component Interconnect Express (PCIe) interface for communications over a PCIe bus. In alternative embodiments, the I/O unit 805 may implement other types of well-known interfaces for communicating with external devices.

The I/O unit 805 is coupled to a host interface unit 810 that decodes packets received via the system bus 802. In one embodiment, the packets represent commands configured to cause the PPU 800 to perform various operations. The host interface unit 810 transmits the decoded commands to various other units of the PPU 800 as the commands may specify. For example, some commands may be transmitted to the front end unit 815. Other commands may be transmitted to the hub 830 or other units of the PPU 800 such as one or more copy engines, a video encoder, a video decoder, a power management unit, etc. (not explicitly shown). In other words, the host interface unit 810 is configured to route communications between and among the various logical units of the PPU 800.

In one embodiment, a program executed by the host processor encodes a command stream in a buffer that provides workloads to the PPU 800 for processing. A workload may comprise a number of instructions and data to be processed by those instructions. The buffer is a region in a memory that is accessible (i.e., read/write) by both the host processor and the PPU 800. For example, the host interface unit 810 may be configured to access the buffer in a system memory connected to the system bus 802 via memory requests transmitted over the system bus 802 by the I/O unit 805. In one embodiment, the host processor writes the command stream to the buffer and then transmits a pointer to the start of the command stream to the PPU 800. The host interface unit 810 provides the front end unit 815 with pointers to one or more command streams. The front end unit 815 manages the one or more streams, reading commands from the streams and forwarding commands to the various units of the PPU 800.

The front end unit 815 is coupled to a scheduler unit 820 that configures the various GPCs 850 to process tasks defined by the one or more streams. The scheduler unit 820 is configured to track state information related to the various tasks managed by the scheduler unit 820. The state may indicate which GPC 850 a task is assigned to, whether the task is active or inactive, a priority level associated with the task, and so forth. The scheduler unit 820 manages the execution of a plurality of tasks on the one or more GPCs 850.

The scheduler unit 820 is coupled to a work distribution unit 825 that is configured to dispatch tasks for execution on the GPCs 850. The work distribution unit 825 may track a number of scheduled tasks received from the scheduler unit 820. In one embodiment, the work distribution unit 825 manages a pending task pool and an active task pool for each of the GPCs 850. The pending task pool may comprise a number of slots (e.g., 16 slots) that contain tasks assigned to be processed by a particular GPC 850. The active task pool may comprise a number of slots (e.g., 4 slots) for tasks that are actively being processed by the GPCs 850. As a GPC 850 finishes the execution of a task, that task is evicted from the active task pool for the GPC 850 and one of the other tasks from the pending task pool is selected and scheduled for execution on the GPC 850. If an active task has been idle on the GPC 850, such as while waiting for a data dependency to be resolved, then the active task may be evicted from the GPC 850 and returned to the pending task pool while another task in the pending task pool is selected and scheduled for execution on the GPC 850.

The work distribution unit 825 communicates with the one or more GPCs 850 via an XBar 870. The XBar 870 is an interconnect network that couples many of the units of the PPU 800 to other units of the PPU 800. For example, the XBar 870 may be configured to couple the work distribution unit 825 to a particular GPC 850. Although not shown explicitly, one or more other units of the PPU 800 are coupled to the host unit 810. The other units may also be connected to the XBar 870 via a hub 830.

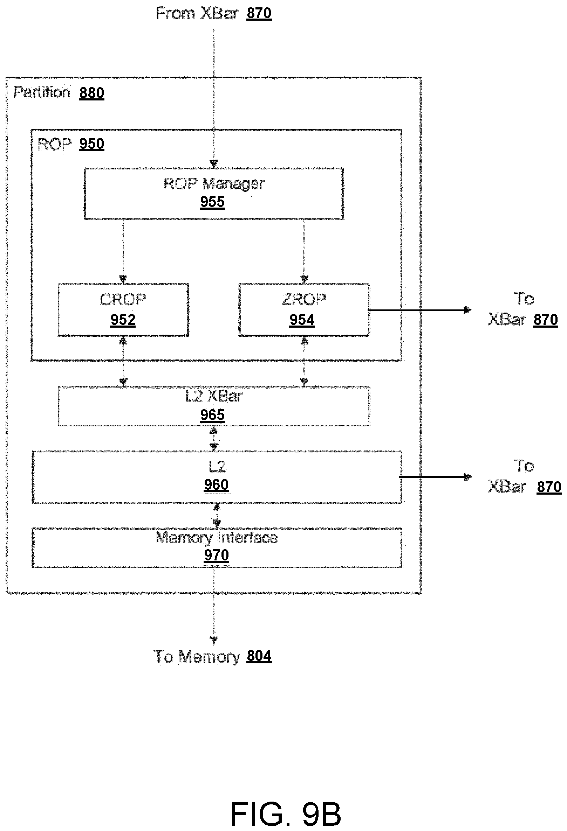

The tasks are managed by the scheduler unit 820 and dispatched to a GPC 850 by the work distribution unit 825. The GPC 850 is configured to process the task and generate results. The results may be consumed by other tasks within the GPC 850, routed to a different GPC 850 via the XBar 870, or stored in the memory 804. The results can be written to the memory 804 via the partition units 880, which implement a memory interface for reading and writing data to/from the memory 804. In one embodiment, the PPU 800 includes a number U of partition units 880 that is equal to the number of separate and distinct memory devices 804 coupled to the PPU 800. A partition unit 880 will be described in more detail below in conjunction with FIG. 9B.

In one embodiment, a host processor executes a driver kernel that implements an application programming interface (API) that enables one or more applications executing on the host processor to schedule operations for execution on the PPU 800. An application may generate instructions (i.e., API calls) that cause the driver kernel to generate one or more tasks for execution by the PPU 800. The driver kernel outputs tasks to one or more streams being processed by the PPU 800. Each task may comprise one or more groups of related threads, referred to herein as a warp. A thread block may refer to a plurality of groups of threads including instructions to perform the task. Threads in the same group of threads may exchange data through shared memory. In one embodiment, a group of threads comprises 32 related threads.

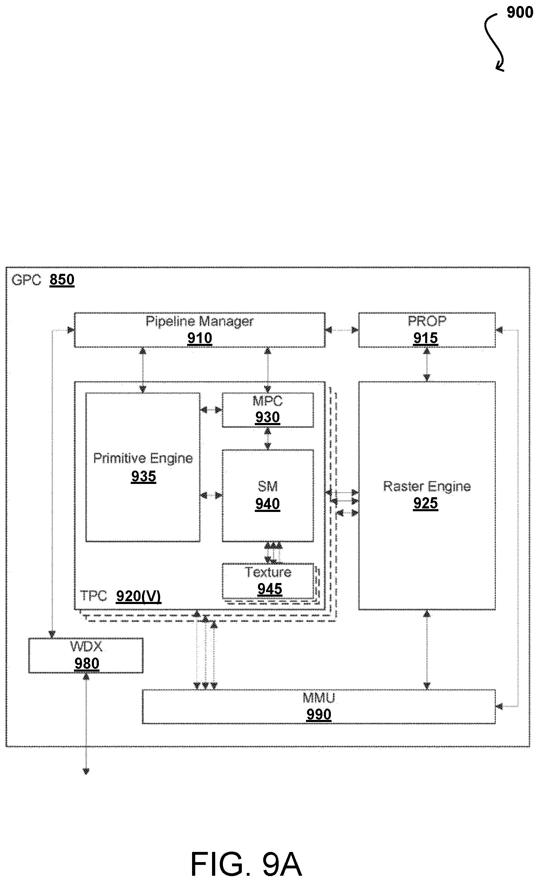

FIG. 9A illustrates a GPC 850 of the PPU 800 of FIG. 8, in accordance with one embodiment. As shown in FIG. 9A, each GPC 850 includes a number of hardware units for processing tasks. In one embodiment, each GPC 850 includes a pipeline manager 910, a pre-raster operations unit (PROP) 915, a raster engine 925, a work distribution crossbar (WDX) 980, a memory management unit (MMU) 990, and one or more Texture Processing Clusters (TPCs) 920. It will be appreciated that the GPC 850 of FIG. 9A may include other hardware units in lieu of or in addition to the units shown in FIG. 9A.

In one embodiment, the operation of the GPC 850 is controlled by the pipeline manager 910. The pipeline manager 910 manages the configuration of the one or more TPCs 920 for processing tasks allocated to the GPC 850. In one embodiment, the pipeline manager 910 may configure at least one of the one or more TPCs 920 to implement at least a portion of a graphics rendering pipeline. For example, a TPC 920 may be configured to execute a vertex shader program on the programmable streaming multiprocessor (SM) 940. The pipeline manager 910 may also be configured to route packets received from the work distribution unit 825 to the appropriate logical units within the GPC 850. For example, some packets may be routed to fixed function hardware units in the PROP 915 and/or raster engine 925 while other packets may be routed to the TPCs 920 for processing by the primitive engine 935 or the SM 940.

Each TPC 920 included in the GPC 850 includes an M-Pipe Controller (MPC) 930, a primitive engine 935, an SM 940, and one or more texture units 945. The MPC 930 controls the operation of the TPC 920, routing packets received from the pipeline manager 910 to the appropriate units in the TPC 920. For example, packets associated with a vertex may be routed to the primitive engine 935, which is configured to fetch vertex attributes associated with the vertex from the memory 804. In contrast, packets associated with a shader program may be transmitted to the SM 940.

In one embodiment, the texture units 945 are configured to load texture maps (e.g., a 2D array of texels) from the memory 804 and sample the texture maps to produce sampled texture values for use in shader programs executed by the SM 940. The texture units 945 implement texture operations such as filtering operations using mip-maps (i.e., texture maps of varying levels of detail). In one embodiment, each TPC 920 includes four (4) texture units 945.

The SM 940 comprises a programmable streaming processor that is configured to process tasks represented by a number of threads. Each SM 940 is multi-threaded and configured to execute a plurality of threads (e.g., 32 threads) from a particular group of threads concurrently. In one embodiment, the SM 940 implements a SIMD (Single-Instruction, Multiple-Data) architecture where each thread in a group of threads (i.e., a warp) is configured to process a different set of data based on the same set of instructions. All threads in the group of threads execute the same instructions. In another embodiment, the SM 940 implements a SIMT (Single-Instruction, Multiple Thread) architecture where each thread in a group of threads is configured to process a different set of data based on the same set of instructions, but where individual threads in the group of threads are allowed to diverge during execution. In other words, when an instruction for the group of threads is dispatched for execution, some threads in the group of threads may be active, thereby executing the instruction, while other threads in the group of threads may be inactive, thereby performing a no-operation (NOP) instead of executing the instruction. The SM 940 may be described in more detail below in conjunction with FIG. 4.

The MMU 990 provides an interface between the GPC 850 and the partition unit 880. The MMU 990 may provide translation of virtual addresses into physical addresses, memory protection, and arbitration of memory requests. In one embodiment, the MMU 990 provides one or more translation lookaside buffers (TLBs) for improving translation of virtual addresses into physical addresses in the memory 804.

FIG. 9B illustrates a partition unit 880 of the PPU 800 of FIG. 8, in accordance with one embodiment. As shown in FIG. 9B, the partition unit 880 includes a Raster Operations (ROP) unit 950, a level two (L2) cache 960, a memory interface 970, and an L2 crossbar (XBar) 965. The memory interface 970 is coupled to the memory 804. Memory interface 970 may implement 16, 32, 64, 128-bit data buses, or the like, for high-speed data transfer. In one embodiment, the PPU 800 comprises U memory interfaces 970, one memory interface 970 per partition unit 880, where each partition unit 880 is connected to a corresponding memory device 804. For example, PPU 800 may be connected to up to U memory devices 804, such as graphics double-data-rate, version 5, synchronous dynamic random access memory (GDDR5 SDRAM). In one embodiment, the memory interface 970 implements a DRAM interface and U is equal to 6.

In one embodiment, the PPU 800 implements a multi-level memory hierarchy. The memory 804 is located off-chip in SDRAM coupled to the PPU 800. Data from the memory 804 may be fetched and stored in the L2 cache 960, which is located on-chip and is shared between the various GPCs 850. As shown, each partition unit 880 includes a portion of the L2 cache 960 associated with a corresponding memory device 804. Lower level caches may then be implemented in various units within the GPCs 850. For example, each of the SMs 940 may implement a level one (LI) cache. The L1 cache is private memory that is dedicated to a particular SM 940. Data from the L2 cache 960 may be fetched and stored in each of the L1 caches for processing in the functional units of the SMs 940. The L2 cache 960 is coupled to the memory interface 970 and the XBar 870. The ROP unit 950 includes a ROP Manager 955, a Color ROP (CROP) unit 952, and a Z ROP (ZROP) unit 954.

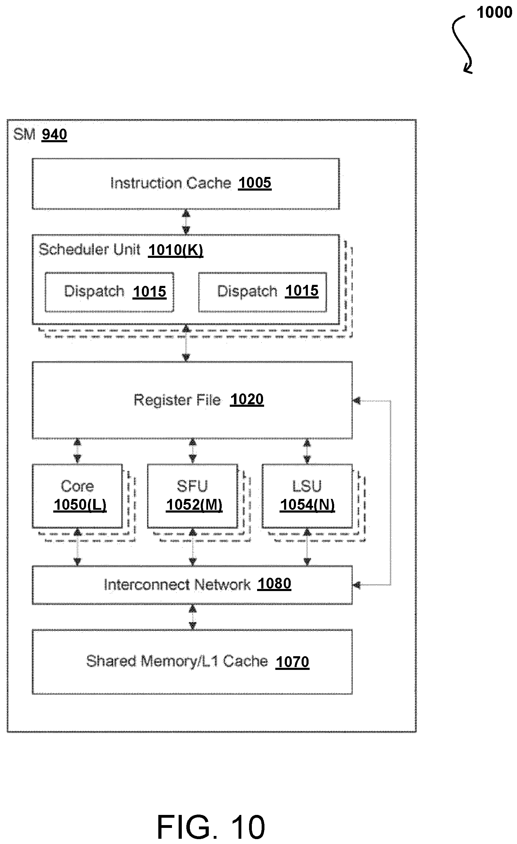

FIG. 10 illustrates the streaming multi-processor 940 of FIG. 9A, in accordance with one embodiment. As shown in FIG. 10, the SM 940 includes an instruction cache 1005, one or more scheduler units 1010, a register file 1020, one or more processing cores 1050, one or more special function units (SFUs) 1052, one or more load/store units (LSUs) 1054, an interconnect network 1080, and a shared memory/L1 cache 1070.

As described above, the work distribution unit 825 dispatches tasks for execution on the GPCs 850 of the PPU 800. The tasks are allocated to a particular TPC 920 within a GPC 850 and, if the task is associated with a shader program, the task may be allocated to an SM 940. The scheduler unit 1010 receives the tasks from the work distribution unit 825 and manages instruction scheduling for one or more groups of threads (i.e., warps) assigned to the SM 940. The scheduler unit 1010 schedules threads for execution in groups of parallel threads, where each group is called a warp. In one embodiment, each warp includes 32 threads. The scheduler unit 1010 may manage a plurality of different warps, scheduling the warps for execution and then dispatching instructions from the plurality of different warps to the various functional units (i.e., cores 950, SFUs 952, and LSUs 954) during each clock cycle.

In one embodiment, each scheduler unit 1010 includes one or more instruction dispatch units 1015. Each dispatch unit 1015 is configured to transmit instructions to one or more of the functional units. In the embodiment shown in FIG. 10, the scheduler unit 1010 includes two dispatch units 1015 that enable two different instructions from the same warp to be dispatched during each clock cycle. In alternative embodiments, each scheduler unit 1010 may include a single dispatch unit 1015 or additional dispatch units 1015.

Each SM 940 includes a register file 1020 that provides a set of registers for the functional units of the SM 940. In one embodiment, the register file 1020 is divided between each of the functional units such that each functional unit is allocated a dedicated portion of the register file 1020. In another embodiment, the register file 1020 is divided between the different warps being executed by the SM 940. The register file 1020 provides temporary storage for operands connected to the data paths of the functional units.

Each SM 940 comprises L processing cores 1050. In one embodiment, the SM 940 includes a large number (e.g., 192, etc.) of distinct processing cores 1050. Each core 1050 may include a fully-pipelined, single-precision processing unit that includes a floating point arithmetic logic unit and an integer arithmetic logic unit. The core 1050 may also include a double-precision processing unit including a floating point arithmetic logic unit. In one embodiment, the floating point arithmetic logic units implement the IEEE 754-2008 standard for floating point arithmetic. Each SM 940 also comprises A SFUs 1052 that perform special functions (e.g., pixel blending operations, and the like), and N LSUs 1054 that implement load and store operations between the shared memory/L1 cache 1070 and the register file 1020. In one embodiment, the SM 940 includes 192 cores 1050, 32 SFUs 1052, and 32 LSUs 1054.

Each SM 940 includes an interconnect network 1080 that connects each of the functional units to the register file 1020 and the shared memory/L1 cache 1070. In one embodiment, the interconnect network 1080 is a crossbar that can be configured to connect any of the functional units to any of the registers in the register file 1020 or the memory locations in shared memory/L cache 1070.

The shared memory/L1 cache 1070 is an array of on-chip memory that, in one embodiment, may be configured as either shared memory or an L1 cache, or a combination of both, as the application demands. For example, the shared memory/L1 cache 1070 may comprise 64 kB of storage capacity. The shared memory/L1 cache 1070 may be configured as 64 kB of either shared memory or L1 cache, or a combination of the two such as 16 kB of L1 cache and 48 kB of shared memory.

The PPU 800 described above may be configured to perform highly parallel computations much faster than conventional CPUs. Parallel computing has advantages in graphics processing, data compression, biometrics, stream processing algorithms, and the like.

In one embodiment, the PPU 800 comprises a graphics processing unit (GPU). The PPU 800 is configured to receive commands that specify shader programs for processing graphics data. Graphics data may be defined as a set of primitives such as points, lines, triangles, quads, triangle strips, and the like. Typically, a primitive includes data that specifies a number of vertices for the primitive (e.g., in a model-space coordinate system) as well as attributes associated with each vertex of the primitive. The PPU 800 can be configured to process the graphics primitives to generate a frame buffer (i.e., pixel data for each of the pixels of the display).

The PPU 800 may be included in a desktop computer, a laptop computer, a tablet computer, a smart-phone (e.g., a wireless, hand-held device), personal digital assistant (PDA), a digital camera, a hand-held electronic device, and the like. In one embodiment, the PPU 800 is embodied on a single semiconductor substrate. In another embodiment, the PPU 800 is included in a system-on-a-chip (SoC) along with one or more other logic units such as a reduced instruction set computer (RISC) CPU, a memory management unit (MMU), a digital-to-analog converter (DAC), and the like.

In one embodiment, the PPU 800 may be included on a graphics card that includes one or more memory devices 804 such as GDDR5 SDRAM. The graphics card may be configured to interface with a PCIe slot on a motherboard of a desktop computer that includes, for example, a northbridge chipset and a southbridge chipset. In yet another embodiment, the PPU 800 may be an integrated graphics processing unit (iGPU) included in the chipset (i.e., Northbridge) of the motherboard.

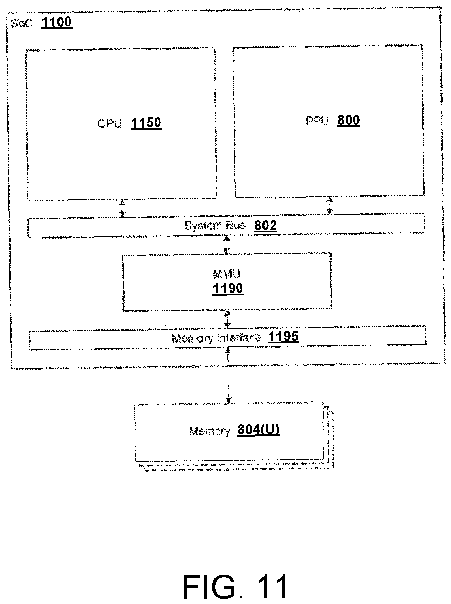

FIG. 11 illustrates a System-on-Chip (SoC) 1100 including the PPU 800 of FIG. 8, in accordance with one embodiment. As shown in FIG. 11, the SoC 1100 includes a CPU 1150 and a PPU 800, as described above. The SoC 1100 may also include a system bus 802 to enable communication between the various components of the SoC 1100. Memory requests generated by the CPU 1150 and the PPU 800 may be routed through a system MMU 1190 that is shared by multiple components of the SoC 1100. The SoC 1100 may also include a memory interface 1195 that is coupled to one or more memory devices 804. The memory interface 1195 may implement, e.g., a DRAM interface.

Although not shown explicitly, the SoC 1100 may include other components in addition to the components shown in FIG. 11. For example, the SoC 1100 may include multiple PPUs 800 (e.g., four PPUs 800), a video encoder/decoder, and a wireless broadband transceiver as well as other components. In one embodiment, the SoC 1100 may be included with the memory 804 in a package-on-package (PoP) configuration.

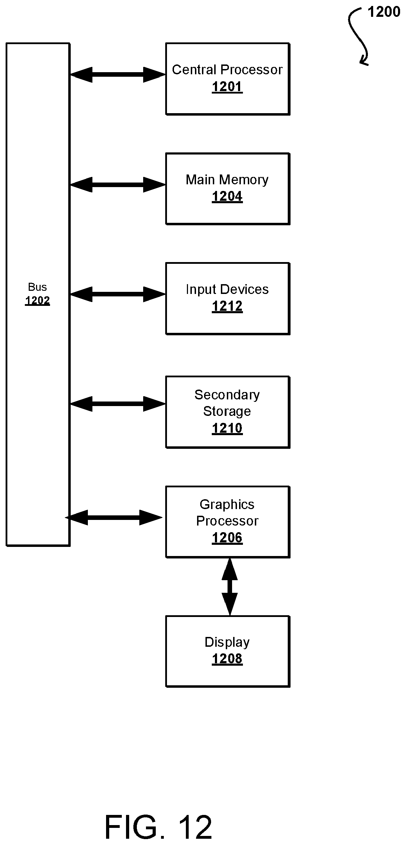

FIG. 12 illustrates an exemplary system 1200 in which the various architecture and/or functionality of the various previous embodiments may be implemented. As shown, a system 1200 is provided including at least one central processor 1201 that is connected to a communication bus 1202. The communication bus 1202 may be implemented using any suitable protocol, such as PCI (Peripheral Component Interconnect), PCI-Express, AGP (Accelerated Graphics Port), HyperTransport, or any other bus or point-to-point communication protocol(s). The system 1200 also includes a main memory 1204. Control logic (software) and data are stored in the main memory 1204 which may take the form of random access memory (RAM).

The system 1200 also includes input devices 1212, a graphics processor 1206, and a display 1208, i.e. a conventional CRT (cathode ray tube), LCD (liquid crystal display), LED (light emitting diode), plasma display or the like. User input may be received from the input devices 1212, e.g., keyboard, mouse, touchpad, microphone, and the like. In one embodiment, the graphics processor 1206 may include a plurality of shader modules, a rasterization module, etc. Each of the foregoing modules may even be situated on a single semiconductor platform to form a graphics processing unit (GPU).

In the present description, a single semiconductor platform may refer to a sole unitary semiconductor-based integrated circuit or chip. It should be noted that the term single semiconductor platform may also refer to multi-chip modules with increased connectivity which simulate on-chip operation, and make substantial improvements over utilizing a conventional central processing unit (CPU) and bus implementation. Of course, the various modules may also be situated separately or in various combinations of semiconductor platforms per the desires of the user.

The system 1200 may also include a secondary storage 1210. The secondary storage 1210 includes, for example, a hard disk drive and/or a removable storage drive, representing a floppy disk drive, a magnetic tape drive, a compact disk drive, digital versatile disk (DVD) drive, recording device, universal serial bus (USB) flash memory. The removable storage drive reads from and/or writes to a removable storage unit in a well-known manner.

Computer programs, or computer control logic algorithms, may be stored in the main memory 1204 and/or the secondary storage 1210. Such computer programs, when executed, enable the system 1200 to perform various functions. The memory 1204, the storage 1210, and/or any other storage are possible examples of computer-readable media.

In one embodiment, the architecture and/or functionality of the various previous figures may be implemented in the context of the central processor 1201, the graphics processor 1206, an integrated circuit (not shown) that is capable of at least a portion of the capabilities of both the central processor 1201 and the graphics processor 1206, a chipset (i.e., a group of integrated circuits designed to work and sold as a unit for performing related functions, etc.), and/or any other integrated circuit for that matter.

Still yet, the architecture and/or functionality of the various previous figures may be implemented in the context of a general computer system, a circuit board system, a game console system dedicated for entertainment purposes, an application-specific system, and/or any other desired system. For example, the system 1200 may take the form of a desktop computer, laptop computer, server, workstation, game consoles, embedded system, and/or any other type of logic. Still yet, the system 1200 may take the form of various other devices including, but not limited to a personal digital assistant (PDA) device, a mobile phone device, a television, etc.

Further, while not shown, the system 1200 may be coupled to a network (e.g., a telecommunications network, local area network (LAN), wireless network, wide area network (WAN) such as the Internet, peer-to-peer network, cable network, or the like) for communication purposes.

The various embodiments can be implemented in a wide variety of operating environments, which in some cases can include one or more user computers or computing devices which can be used to operate any of a number of applications. User or client devices can include any of a number of general purpose personal computers, such as desktop or laptop computers running a standard operating system, as well as cellular, wireless and handheld devices running mobile software and capable of supporting a number of networking and messaging protocols. Such a system can also include a number of workstations running any of a variety of commercially-available operating systems and other known applications for purposes such as development and database management. These devices can also include other electronic devices, such as dummy terminals, thin-clients, gaming systems and other devices capable of communicating via a network.

Most embodiments utilize at least one network that would be familiar to those skilled in the art for supporting communications using any of a variety of commercially-available protocols, such as TCP/IP or FTP. The network can be, for example, a local area network, a wide-area network, a virtual private network, the Internet, an intranet, an extranet, a public switched telephone network, an infrared network, a wireless network and any combination thereof. In embodiments utilizing a Web server, the Web server can run any of a variety of server or mid-tier applications, including HTTP servers, FTP servers, CGI servers, data servers, Java servers and business application servers. The server(s) may also be capable of executing programs or scripts in response requests from user devices, such as by executing one or more Web applications that may be implemented as one or more scripts or programs written in any programming language, such as Java®, C, C# or C++ or any scripting language, such as Python, as well as combinations thereof. The server(s) may also include database servers, including without limitation those commercially available from Oracle®, Microsoft®, Sybase® and IBM®.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network (SAN) familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit (CPU), at least one input device (e.g., a mouse, keyboard, controller, touch-sensitive display element or keypad) and at least one output device (e.g., a display device, printer or speaker). Such a system may also include one or more storage devices, such as disk drives, optical storage devices and solid-state storage devices such as random access memory (RAM) or read-only memory (ROM), as well as removable media devices, memory cards, flash cards, etc.

Such devices can also include a computer-readable storage media reader, a communications device (e.g., a modem, a network card (wireless or wired), an infrared communication device) and working memory as described above. The computer-readable storage media reader can be connected with, or configured to receive, a computer-readable storage medium representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs such as a client application or Web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Storage media and other non-transitory computer readable media for containing code, or portions of code, can include any appropriate media known or used in the art, such as but not limited to volatile and non-volatile, removable and non-removable media implemented in any method or technology for storage of information such as computer readable instructions, data structures, program modules or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices or any other medium which can be used to store the desired information and which can be accessed by a system device. Based on the disclosure and teachings provided herein, a person of ordinary skill in the art will appreciate other ways and/or methods to implement the various embodiments

The specification and drawings are, accordingly, to be regarded in an illustrative rather than a restrictive sense. It will, however, be evident that various modifications and changes may be made thereunto without departing from the broader spirit and scope of the invention as set forth in the claims.

## Claims

1. A graphics processing unit (GPU) comprising:
one or more multiprocessors to store one or more results into a local storage in response to performing one or more threads of a first block; and
one or more logic circuits to cause the one or more results to be read from the local storage in response to a call from the first block of threads to a second block of threads using an application binary interface, ABI, and without accessing a global storage.

2. The graphics processing unit of claim 1, wherein the local storage includes registers and shared memory in the one or more multiprocessors.

3. The graphics processing unit of claims 1 or 2, wherein the one or more logic circuits are further at least one of the following
- to enable the first block to issue the call via the ABI to be received to the second block of threads according to a convention published for the ABI,
- to limit access to the results stored in the local storage to the first block of threads and the second block of threads
- to allow individual threads to exit the first block of threads without impacting threads participating in the second block of threads.

4. The graphics processing unit of any of the preceding claims, wherein the first block of threads corresponds to a first set of operators compiled separately from a second set of operators corresponding to the second block of threads.

5. The graphics processing unit of any of the preceding claims, wherein the results correspond to a computation performed in parallel by all threads in at least one of the first block or the second block of threads.

6. A system comprising:
a global memory; and
one or more processors including one or more multiprocessors coupled to one or more registers and shared memory, wherein the one or more multiprocessors are to cause one or more results to be read from the one or more registers or shared memory in response to a call from a first block of threads to a second block threads using an application binary interface, ABI, and without having to access the global memory.

7. The system of claim 6, wherein the one or more multiprocessors are further at least one of the following
- to enable the first block to issue the call via the ABI to be received to the second block of threads according to a convention published for the ABI,
- to allow individual threads to exit the first block of threads without impacting threads participating in the second block of threads.

8. The system of claims 6 or 7, wherein the first block of threads corresponds to a first set of operators compiled separately from a second set of operators corresponding to the second block of threads.

9. The system of any of claims 6 to 8, wherein the one or more results are generated from the first block of threads, and wherein the one or more multiprocessors are further to limit access to the one or more results in the one or more registers or shared memory to the first block of threads and the second block of threads.

10. The system of any of claims 6 to 9, wherein the one or more results correspond to a computation performed in parallel by all threads in at least one of the first block or the second block of threads.

11. A method comprising:
enabling, by a multiprocessor, a first block of threads to communicate with a second block of threads using an application binary interface (ABI), the threads corresponding to computations to perform on the multiprocessor;
causing a result of an individual thread of the first block to be stored to local storage of the multiprocessor, the local storage including a set of registers and shared memory;
enabling the individual thread to exit the first block while the first block is still computing results to communicate with the second block of threads; and
enabling the second block of threads to access the result from the local storage without having to access a global memory of the multiprocessor.

12. The method of claim 11, wherein the local storage includes registers and shared memory in the multiprocessor.

13. The method of claims 11 of 12, further comprising:
enabling the first block to issue a function call via the ABI to be received to the second block of threads according to a convention published for the ABI.

14. The method of any of claims 11 to 13, further comprising at least one of the following:
- compiling a first set of operators, corresponding to the first block of threads, separately from a second set of operators corresponding to the second block of threads;
- limiting access to the results stored in the local storage to the first block of threads and the second block of threads;
- enabling individual threads to exit the first block of threads without impacting threads participating in the second block of threads.

15. The method of any of claims 11 to 14, wherein the results correspond to a computation performed in parallel by all threads in at least one of the first block or the second block of threads.
